# EUROPEAN PATENT APPLICATION

(11) **EP 4 425 872 A1**
(43) Date of publication of application: **04.09.2024**
(21) Application number: 23159605.7
(22) Date of filing: 02.03.2023
(51) Int. Cl.: H04L 43/50, H04L 43/55, H04L 41/044, H04L 41/0853, H04L 41/0894, H04L 41/0895, H04L 41/14, H04L 41/147, H04L 41/40, H04L 43/0805, H04L 43/0811, H04L 43/0817, H04L 43/20

(54) **METHOD AND MANAGEMENT COMPONENTS FOR TESTING VIRTUALIZED COMMUNICATION SYSTEMS**

(71) Applicant: NTT DOCOMO, INC., Chiyoda-Ku Tokyo 100-6150 (JP)
(72) Inventor: KATSALIS, Kostas, 80687 Munich (DE); TRIAY, Joan, 80687 Munich (DE); TANIGUCHI, Kosuke, Tokyo, 100-6150 (JP); KUNO, Yuya, Tokyo, 100-6150 (JP)
(74) Representative: Viering, Jentschura & Partner mbB Patent- und Rechtsanwälte

(57) **Abstract**

According to one embodiment, a test management component of a communication system is provided comprising a test input interface configured to receive a request for a test to be performed in the communication system and a specification of the test, a processing unit configured to determine, according to the specification of the test, a plurality of communication network components of the communication system which need to be involved in the test to perform the test, for each communication network component a respective test controller which is able to manage the communication network component with respect to testing and for each determined test controller a specification of a sub-test to be performed by the test controller and a test control interface configured to send, for each determined test controller, the determined specification of the sub-test to be performed by the test controller to the test controller.

## Description

The present disclosure relates to test management components, test controllers, methods for managing and orchestrating a test of a communication system and methods for processing a request for a test of a communication system.

A connection between two communication devices (e.g. two physical server systems or a virtual function residing in a VM and a server) may span over multiple administration domains.

For example, two systems belonging to different telecom operators need to communicate to support roaming operations for subscribers moving between a mobile communication network operated by an operator to a communication network operated by another operator's network.

These scenarios are in particular challenging when it comes to testing: a test controller (i.e. an entity which is to perform a test and accordingly needs to manage components which are involved in the test) may actually not be able to manage all the components that need to be involved since, for example, they belong to different operators and the test controller may not be able to manage all these components with respect to testing (because, for example, a component belongs to one operator while a component that needs to be involved belongs to another operator and the first operator has no access rights).

Accordingly, efficient approaches that allow testing in a multi-domain (e.g. multi-operator) communication system are desirable.

According to one embodiment, a test management component of a communication system is provided comprising a test input interface configured to receive a request for a test to be performed in the communication system and a specification of the test, a processing unit configured to determine, according to the specification of the test,
- a plurality of communication network components of the communication system which need to be involved in the test to perform the test;
- for each communication network component a respective test controller which is able to manage the communication network component with respect to testing; and
- for each determined test controller a specification of a sub-test to be performed by the test controller for the communication network components among of the determined plurality of communication network components which the test controller is able to manage with respect to testing; and
a test control interface configured to send, for each determined test controller, the determined specification of the sub-test to be performed by the test controller to the test controller.

Further, a test controller, a method for managing a test of a communication system and a method for processing a request for a test of a communication system according to the above test management component are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system.
- Figure 2: shows an architecture including a simplified version of the Network Functions Virtualisation Management and Orchestration (NFV-MANO) Architectural Framework.
- Figure 3: illustrates communication connections in a multi-network and multi-operator (i.e. multi-domain) environment.
- Figure 4: shows an architecture for testing in a multi-operator and virtualized communication system (i.e. a multi-domain in a virtualized environments) according to an embodiment.
- Figure 5: shows an architecture for testing in a multi-operator and virtualized communication system according to another embodiment.
- Figure 6: shows an architecture for testing in a multi-operator and virtualized communication system according to a further embodiment.
- Figure 7: illustrates the interactions of a domain tester with other management systems.
- Figure 8: shows an example where a domain tester manages a first area tester and a second area tester handling different layers with respect to testing.
- Figure 9: illustrates an example of sub-tests for a network service test when considering virtualization.
- Figure 10: illustrates a hierarchical architecture model and a distributed architecture model.
- Figure 11: shows an example for an architecture where a testing broker is in communication with five domain testers and the receiver is changing domain.
- Figure 12: shows an example where a testing broker is arranged in an O-RAN (Open Radio Access Networks) architecture.
- Figure 13: shows an exemplary flow for performing a test in case that the specification of the test is passed to one of the domain testers from an operator.
- Figure 14: shows an exemplary flow for performing a test in case that the specification of the test is passed to the testing broker.
- Figure 15: shows a flow diagram illustrating an example for single operator intra-NFVI-Pop NS (Network Function Virtualization Infrastructure Connectivity Point of Presence Network Service) testing.
- Figure 16: shows a flow diagram illustrating an example for multi operator intra-NFVI-Pop NS connectivity testing.
- Figure 17: shows a test management component of a communication system.
- Figure 18: shows a flow diagram illustrating a method for managing a test of a communication system.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a test management component of a communication system as described above.
Example 2 is the test management component according to example 1, wherein each test controller has a respective policy and/or is able to use respective (supported) capabilities and (available) resources for testing and the test management component is configured to negotiate with each test controller the sub-test to be performed by the test controller to conform with the policy of the test controller and/or to be feasible with the capabilities and the resources.
Example 3 is the test management component according to example 1 or 2, wherein each sub-test includes a plurality of test operations and the negotiation with each test controller comprises determining the test operations to conform with the policy of the test controller and the specification of the sub-test.
Example 4 is the test management component according to any one of examples 1 to 3, wherein the test is about end-to-end communication testing between two components of the communication system and determining the plurality of communication network components of the communication system which need to be involved in the test comprises determining communication network components providing the end-to-end communication.
Example 5 is the test management component according to any one of examples 1 to 4, wherein each test controller is able to manage communication network components of a respective domain of the communication system associated with the test controller with respect to testing.
Example 6 is the test management component according to any one of examples 1 to 5, wherein each domain of the communication system comprises one or more sub-networks and/or one or more layers of the protocol stack of the communication system.
Example 7 is the test management component according to any one of examples 1 to 6, wherein the domains associated with different test controllers are domains of different communication network operators.
Example 8 is the test management component according to any one of examples 1 to 7, wherein the test input interface is configured to receive the request for the test and the specification of the test from a support system of one of the communication network operators or from one of the test controllers.
Example 9 is the test management component according to any one of examples 1 to 8, wherein the test controllers are test area controllers, wherein each test area controller controls a respective sub-set of communication network components and/or functionalities of communication network components.
Example 10 is the test management component according to example 9, wherein the test management component is configured to create at least some of the test area controllers according to the specification of the test.
Example 11 is a test controller of a part of a communication system comprising a test input interface configured to receive a request for a test to be performed in the communication system and a specification of the test and a processing unit configured to
   - determine whether the test involves one or more communication network components which the test controller is not able to manage with respect to testing; and
   - if the test involves one or more communication network components which the test controller is not able to manage with respect to testing, trigger a test management system functionality for managing that the test is performed by the test controller and a set of one or more other test controllers which are able to manage the one or more communication network components which the test controller is not able to manage with respect to testing.
Example 12 is the test controller of example 11, configured to perform the test if the test involves only communication network components which the test controller is able to manage with respect to testing.
Example 13 is the test controller of example 11 or 12, wherein the test controller is configured to perform a sub-test of the test which involves only communication network components which the test controller is not able to manage with respect to testing if the test involves one or more communication network components which the test controller is not able to manage with respect to testing.
Example 14 is the test controller of example 13, wherein the test input interface is configured to receive a specification of the sub-test from a test management system providing the test management system functionality.
Example 15 is the test controller of any one of examples 11 to 14, wherein the test controller comprises a test management system providing the test management system functionality.
Example 16 is the test controller of any one of examples 11 to 15, wherein the test management system functionality is provided by a test management system external to the test controller and the test controller comprises a test output interface configured to trigger the test management system functionality by forwarding the specification of the test to the test management system.
Example 17 is the test controller of any one of examples 11 to 16, wherein the test controller is configured to dynamically determine endpoints assigned to nodes and/or functions involved in the test and to perform the test using the determined endpoints.
Example 18 is the test controller of any one of examples 11 to 17, wherein the test controller is configured to perform the test or a sub-test of the test by means of a plurality of test area controllers, wherein each test area controller controls a respective sub-set of communication network components and/or functionalities of communication network components.
Example 19 is the test controller of example 18, wherein the test controller is configured to control the test area controllers to dynamically determine endpoints assigned to nodes and/or functions involved in the test or sub-test and to perform the test or sub-test using the determined endpoints.
Example 20 is the test controller of example 18 or 19, wherein the subset of communication network components is the subset of communication network components of a respective geographical area associated with the test area controller and/or wherein the subset of functionalities of communication network components is the sub-set of functionalities of communication network components of a communication layer associated with the test area controller.
Example 21 is a communication system comprising a test management component of any one of examples 1 to 10 and a test controller of any one of examples 11 to 14 or 16 to 20.
Example 22 is a method for managing a test of a communication system, the method comprising receiving a request for a test to be performed in the communication system and a specification of the test; determining, according to the specification of the test,
   - a plurality of communication network components of the communication system which need to be involved in the test to perform the test;
   - for each communication network component a respective test controller which is able to manage the communication network component with respect to testing;
   - for each determined test controller a specification of a sub-test to be performed by the test controller for the communication network components among of the determined plurality of communication network components which the test controller is able to manage with respect to testing and
   sending, for each determined test controller, the determined specification of the sub-test to be performed by the test controller to the test controller.
Example 23 is a method for processing a request for a test of a communication system, the method comprising receiving, by a test controller, a request for a test to be performed in the communication system and a specification of the test, determining whether the test involves one or more communication network components which the test controller is not able to manage with respect to testing and if the test involves one or more communication network components which the test controller is not able to manage with respect to testing, triggering a test management system functionality for managing that the test is performed by the test controller and a set of one or more other test controllers which are able to manage the one or more communication network components with respect to testing which the test controller is not able to manage with respect to testing.

It should be noted that one or more of the features of any of the examples above may be combined with any one of the other examples. In particular, the Examples described in context of the devices are analogously valid for the methods.

According to further embodiments, a computer program and a computer readable medium comprising instructions, which, when executed by a computer, make the computer perform a method of any one of the above Examples are provided.

In the following, various examples will be described in more detail.

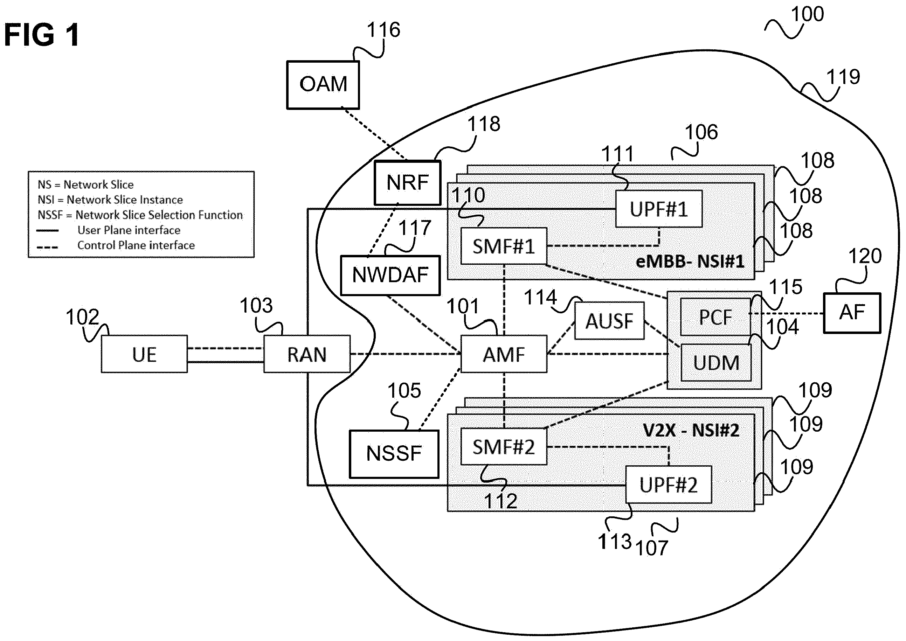

Figure 1 shows a mobile radio communication system 100, for example configured according to 5G (Fifth Generation) as specified by 3GPP (Third Generation Partnership Project) in simplified form.

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

Compared to the legacy LTE and 5G approach, where a base station was used to provide access to the network, the RAN part 103 can be disaggregated considering multiple different physical and virtual components. For example the functionality of a single gNB can be provided by three different entities, a Control Unit (CU), one or more Distributed Units (DU) and one or more Radio Units (RUs). Furthermore these can be deployed as physical network functions (PNFs) or Virtual Network Functions (VNFs), for example a virtualized DU.

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice.

In the following, "network slice" (or just "slice") generally refers to a core network slice but may also include a RAN slice or even a Transport network slice. In other words, each network slice may be made of network slice subnets like a RAN subnet, a core network subnet and a transport subnet.

An S-NSSAI (Single Network Slice Selection Assistance information) identifies a network slice. A network slice instance (NSI) is identified by an NSI ID.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load.

Further, the core network 118 includes an NRF (Network Repository Function).

The core network 119 may further include a Network Data Analytics Function (NWDAF) 117. The NWDAF is responsible for providing network analytics and/or prediction information upon request from network functions.

The various network functions can be implemented on specialized hardware, i.e. on so-called ACTA (Advanced Telecommunications Computing Architecture) devices. This means that the network functions are implemented as physical network functions deployed on special hardware. In that case, software for implementing the network function is strongly coupled with the hardware.

However, it may be desirable to implement network functions also on non-specialized hardware, i.e. as software applications running on virtual machines (and/or a container) deployed over COTS (Commercial off-the-shelf) servers (i.e. on general purpose or open computing platforms, i.e. devices). This is enabled by using virtualization technology (e.g., hypervisor, operating system (OS) containers etc.), which can be used to deploy network functions (e.g., SMF, PCF etc.) as software applications running on virtual machines (VMs) and/or containers. They are then referred to as virtual network functions (VNFs).

Management and orchestration (MANO) is a key element of the ETSI (European Telecommunications Standards Institute) network functions virtualization (NFV) architecture. NFV-MANO is an architectural framework that coordinates network resources for cloud-based applications and the lifecycle management of virtual network functions (VNFs) and network services. As such, it is crucial for ensuring rapid, reliable NFV deployments at scale. NFV-MANO includes several Functional Blocks and functions like the NFV orchestrator (NFVO), the VNF manager (VNFM), the virtual infrastructure manager (VIM) and the Container Infrastructure Service Management (CISM).

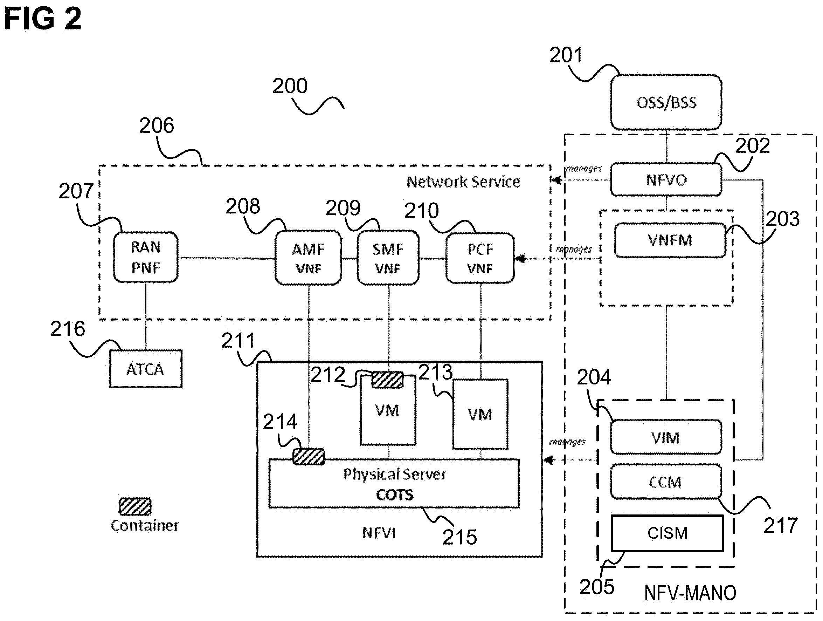

Figure 2 shows an architecture 200 including a simplified version of the Network Functions Virtualisation Management and Orchestration (NFV-MANO) Architectural Framework. It includes a collection of functional blocks and functions, data repositories used by these functional blocks, and reference points and interfaces through which these functional blocks exchange information for the purpose of managing and orchestrating NFV.

The architecture 200 includes an OSSBSS (operations support system and business support system) 201, and an NFV-MANO including an NFVO 202, an VNFM 203, a VIM 204, a CISM (container Infrastructure Service Management) 205 and a CCM (CIS Cluster Management) 217.

The NFVO 202 manages a network service (NS) 206 which, in this example, includes the following network functions: an AMF 208, an SMF 209 and a PCF 210 and a RAN component 207. A network service (NS) is a composition of physical and virtual network function(s) and/or service(s), defined by its functional and behavioural specification.

The architecture 200 further includes an NFVI (Network Function Virtualization Infrastructure) 211 which includes hardware and software components that build up the virtualized environment in which VNFs are deployed.

In this example, the AMF 208, the SMF 209 and the PCF 210 are implemented as VNFs, i.e. as NFs that can be deployed on the NFVI 211. The SMF 209 is implemented by a container 212 running in a virtual machine, the PCF 210 on a virtual machine 213 and the AMF 208 in a container 214, all running on a COTS server 215. The RAN component 207 is, in contrast, implemented on an ATCA device 216, i.e. is a physical network function.

The NFVO 202 manages the NS lifecycle and coordinates the overall resource usage of NS, VNF lifecycle is supported by the VNFM 203 and NFVI resources management supported by the VIM 204, CISM 205 and CCM 217 to ensure an optimized allocation of the necessary resources and connectivity.

The VNFM 203 is responsible for the lifecycle management of VNFs independently on whether the VNF is deployed over VM or containers.

The VIM 204 is responsible for controlling and managing the NFVI compute, storage and network resources, typically within one operator's infrastructure domain. The CISM 205 is responsible for orchestrating and managing the container infrastructure services and the containerized workloads instantiated on them. The CCM 217 is responsible for the management of container clusters.

It should be noted that regarding network functionality, 3GPP is responsible for the management and configuration of the Network Functions (NFs) and interactions between NFs while it is not responsible for the management of the virtual network function aspects. In fact, the 3GPP functionality remains the same from an application perspective irrespective of whether a network function is virtualized or not. From ETSI NFV perspective, the NFV-MANO handles the orchestration and management of the both virtualized resources and the deployed VNF while remaining agnostic to the actual VNF application (e.g., if the VNF application is a virtualized PCF or a virtualized SMF).

Regarding VNF management, not only VNF instantiation but also other life cycle management (LCM) operations such as, update, scaling etc. are made by NFV-MANO (NFVO/VNFM/CISM/VIM) and the VNF configuration can be made by an element manager through interaction with the OSS.

A Network Point of Presence (N-PoP) is a location where a Network Function is implemented as either a Physical Network Function (PNF) or a Virtual Network Function (VNF). A Network Function Virtualization Infrastructure Point of Presence (NFVI-PoP) is an N-PoP where a network function is or could be deployed as virtual network function (VNF).

In a virtualized environment testing operations can be categorized based on whether they refer to VNF Application testing (e.g., performance of the virtualized SMF), VNF connectivity testing with other components, physical and virtual network testing, virtualized management components testing, upgrade component testing, physical resources testing etc.

Regarding connectivity testing when virtual network functions are involved in the test, i.e. when testing is performed in a virtualized environment, the testing should typically consider multiple different dimensions. For example:
- connectivity testing considering the underlay network
- connectivity testing considering the overlay network.
- Different sending and receiving entities (i.e. components) like VNF-to-VNF, VNFC-to-VNFC, VNFC-to-gateway, Node-to-node etc.
- Different virtualization technologies (e.g., VM-based, container-based)

Connectivity testing typically involves reachability testing (like between hops and end-to-end reachability) and communication quality of service and performance testing.

Connectivity testing may include testing on one or more layers (in particular, multilayer testing may be considered) like the PHY layer, the MAC (medium access control) layer, etc.

Further, different types of endpoints (associated with components involved in the test) may used be for a test (e.g., IP (Internet Protocol) addresses, ports, FQDN (Fully Qualified Domain Name), URI (Uniform Resource Locator) etc.). Endpoints can be used to characterize the sender and the receiver. In a virtualized environment endpoints are not strictly associated with the physical nodes and can constantly change (e.g., because of mobility/scaling/failover etc.). When it comes to testing, dynamic identification of the endpoints is necessary to be supported and is challenging to be managed.

Furthermore, a communication connection between two such endpoints may extend over multiple communication networks operated by different operators, i.e. the testing of a communication connection may need to be perform in a multi-network (and possibly multi-operator) environment.

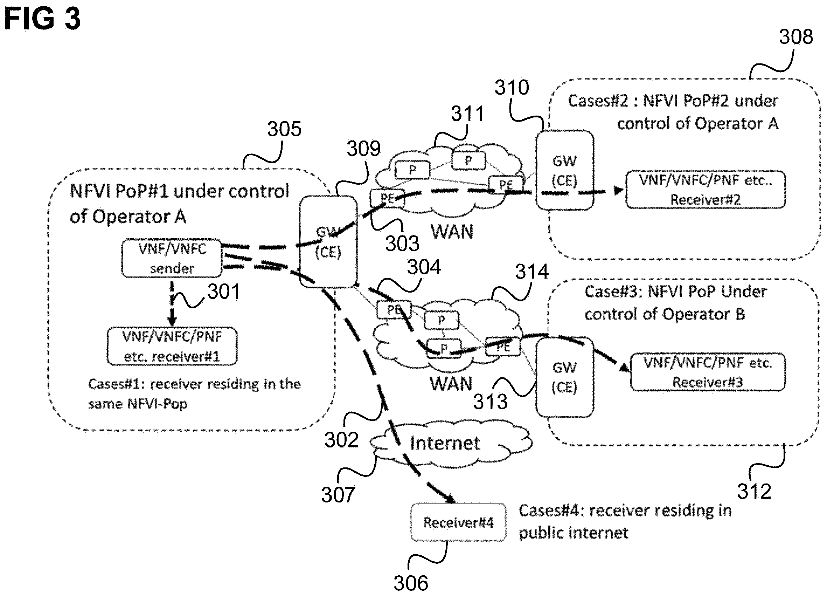

Figure 3 illustrates communication connections 301, 302, 303, 304 in a multi-network and multi-operator environment.

For all three communication connections 301, 302, 303, 304 the sender is in a first NFVI-PoP (e.g. first data centre) 305 under Operator A control. The receiver is
- In case of the first communication connection 301 inside the same NFVI-PoP 305 as the sender.
- In case of the second communication connection 302 an external entity (i.e. component) 306 residing in public internet 307 (e.g., an external web service).
- In case of the third communication connection 303 a second NFVI-PoP (e.g. second data centre) 308 under the control of the same operator (Operator A). This is for example the case of an NS spanning multiple NFVI-PoPs. The two NFVI-PoPs comprise respective customer edge (CE) devices 309, 310 to communicate over a first WAN (wide area network) 311. The operator of the first WAN (wide area network) 311 may be different from Operator A.
- In case of the fourth communication connection 304 a third NFVI-PoP 312 under the control of a different operator (Operator B) than the first NFVI-PoP 304 (Operator A). The two NFVI-PoPs comprise respective CE devices 309, 313 to communicate over a second WAN (wide area network) 314.

The WANs 311, 314 (backbone networks) comprise Provider Edge devices (PE) at their edges which are network devices connecting to the Customer Edge (CE) devices, 309,310, 313. CE devices can be understood as gateway systems. There are P devices within the WANs 311, 314 which are provider devices in the respective WAN segments.

A multi-operator communication system like illustrated in figure 3 comprises multiple (sub-)networks wherein each of those networks belongs to a different operator, i.e., for each of those networks, a respective operator is able to manage ( e.g., has the right to configure and control) over the network (while the other operators are not able to manage this network).

In view of the various cases which may arise in testing in a multi-operator and virtualized communication system as illustrated in figure 3, according to various embodiments, means to orchestrate end-to-end multi-operator NS/VNF testing are provided. In particular, according to various embodiments, approaches are provided to address the following issues arising in such an environment:
- in a virtualized environment endpoints are constantly changing; the endpoints involved in a test need to be defined and communicated to the domains of the various operators (i.e. the (sub-)networks of the communication system controlled by the different operators).
- For testing an end-to-end connection, the actual communication path that needs to be traversed from the starting point until the destination point is reached passes by different network segments (e.g., VNF/VNFC to CE gateway, CE to PE, PE-P, etc.) of (sub-networks) which may be controlled by different operators. Means to orchestrate end-to-end testing in such a scenario besides manual communication between administrators are desirable.
- Provide means to automate multi-operator end-to-end network/service testing feasibility checking.
- Means to automatically logically segment the network within the NFVI-PoP boundaries for more granular testing are desirable (typically not possible if each operator domain is considered as one flat network).

An example for a testing use case in a multi-operator communication system is the support of testing in a roaming use case where systems and Network Functions from one operator need to communicate with systems and Network Functions from another operator.

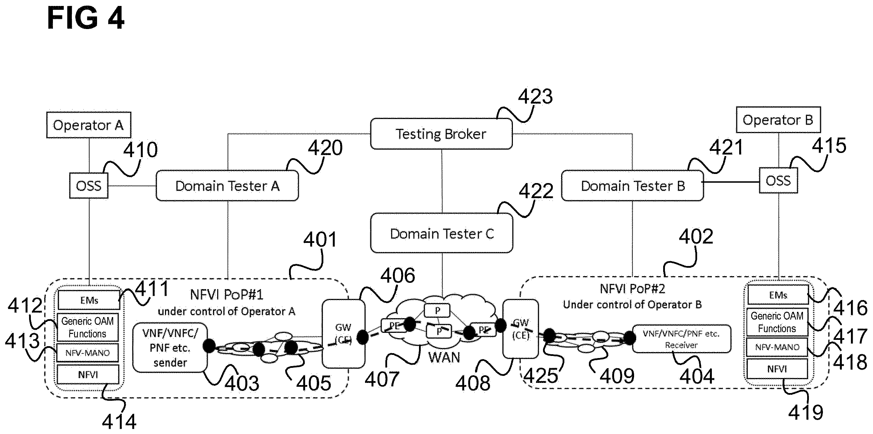

Figure 4 shows an architecture for testing in a multi-operator and virtualized communication system (i.e. a multi-domain in a virtualized environments) according to an embodiment.

In this example, a first NFVI-PoP 401 controlled by a first operator (Operator A) and a second NFVI-PoP 402 controlled by a second operator (Operator B) are involved in the testing, because, for example, a communication connection between a sender 403 in the first NFVI-PoP 401 and a receiver 404 in the second NFVI-PoP 402 should be tested. The sender 403 and the receiver 404 communicate via a (sub-)network 405 of the first NFVI-PoP 401, a gateway 406 of the first NFVI-PoP 401, a WAN 407 (having P devices and PE devices as mentioned above), a gateway 408 of the second NFVI-PoP 402 and a (sub-)network 409 of the second NFVI-PoP 402.

The first operator operates a first OSS 410 connected to components of the first NFVI-PoP 401 like one or more element managers 411, generic OAM functions 412, an NFV-MANO 413, NFVI 414 like also NFVI management systems. The second operator operates a second OSS 415 connected to components of the second NFVI-PoP 402 like one or more element managers 416, generic OAM functions 417, an NFV-MANO 418, NFVI 419 like also NFVI management systems.

Each operator has a respective associated domain tester (also referred to as (domain) test controller) for each NFVI-PoP 401, 402, i.e. Operator A provides and operates a first domain tester 420 for the first NFVI-PoP 401 and Operator B provides and operates a second domain tester 421 for the second NFVI-PoP 402. Each of the first and the second domain tester 420, 421 operates as a testing coordinator for components of the NFVI-PoP 401, 402 for which it is operated. Further, a third domain tester 422 is provided for the WAN 407 (by the WAN's operator) as a testing coordinator for components of the WAN 407. The third domain tester 422 may be part of a WAN Infrastructure Manager (WIM).

Each domain tester 420-422 can be used to perform a series of tests on NS, VNF, VNFC, node and/or network level, e.g.
- network tests (e.g., VNFC to VNFC, VNFC to PNF, etc)
- VNF tests
- VNF application tests.

Other functional blocks, e.g. NFV-MANO functional blocks, can be also under test (e.g. NFVO-to- NFVO connectivity testing belonging to different domains).

To support testing in a multi-operator environment (i.e. a communication system having domains (i.e. (sub-networks) controlled by different operators) a testing broker (also referred to as testing management component) 423 is provided which communicates with the domain testers 420-422.

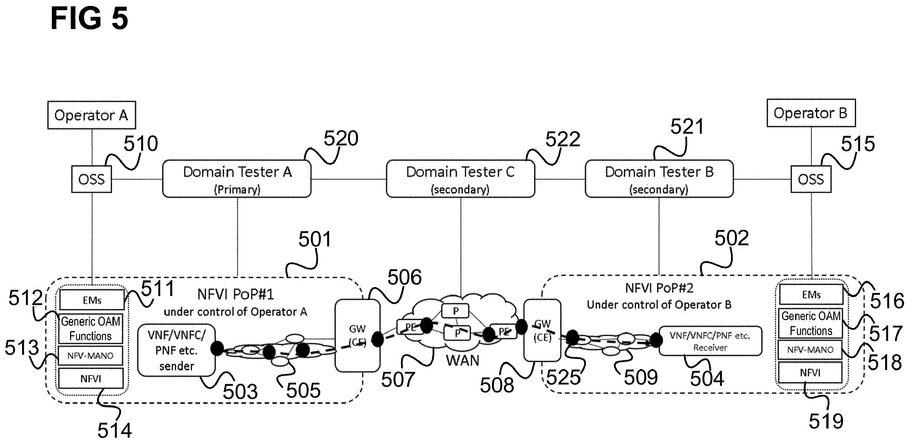

In one embodiment the testing broker is part of one of the domain testers. This is illustrated in figure 5.

Figure 5 shows an architecture for testing in a multi-operator and virtualized communication system according to another embodiment.

The architecture of figure 5 corresponds to the one of figure 4 with the difference that the one of the domain testers, here the domain tester 520 provided by Operator A, acts as the testing broker 423, i.e. has testing broker service capabilities (i.e. provides a test management system functionality). It is declared as Master (or primary domain tester) while the other domain testers 521 522 are declared as Slaves (or secondary domain testers). The Master (testing broker) 520 performs the tasks of the testing broker 423 such as triggering the test, test specification negotiation and enforcement of the test configuration.

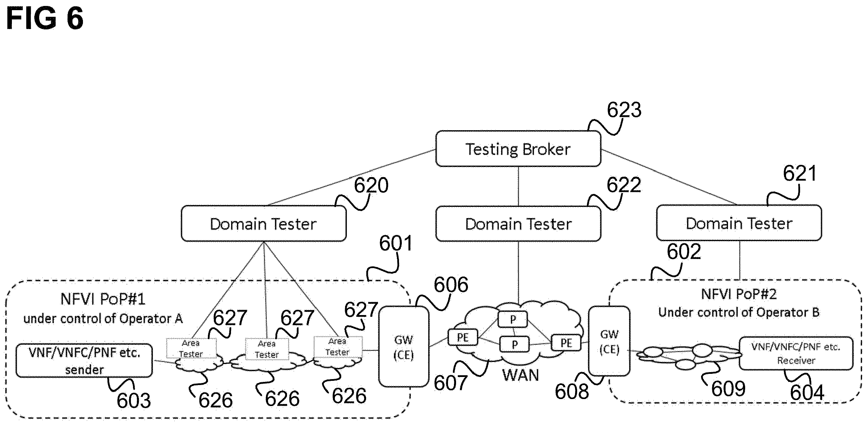

Furthermore, a domain tester may further segment its domain (i.e. the domain it controls), at least partially. This is illustrated in figure 6.

Figure 6 shows an architecture for testing in a multi-operator and virtualized communication system according to a further embodiment.

Operators and OSSs are omitted for simplicity in figure 6.

The architecture of figure 6 corresponds to the one of figure 4 with the difference that the one of the domain testers, here the domain tester 620 of Operator A, has segmented (a part of) its domain (specifically the network 405) into test areas (or zones) 626, each being provided with a respective area tester (or test area controller) 627. So, at each test area 626 inside a domain a respective area tester 627 is used to manage testing. The area testers 627 are managed by the domain tester 620.

In the following, the functionality of the testing broker, the domain testers and the area testers is described with reference to the hierarchical architecture model of figure 4 but all operations and functionalities analogously apply to the distributed architecture model of figure 5. Similarly, when reference to the architecture of figure 4 is made (in particular to the testing broker 423) all operations and functionalities described analogously apply to the architecture of figure 6. Additionally, it should be noted that the segmentation of one or more domains as shown in figure 6 may also be done in the distributed architecture model of figure 5.

End-to-end testing involves communication between area testers (if applicable), the (involved) domain testers and the testing broker.

Testing may in particular include any possible aspect related to NS connectivity. For example test or sub-test may be about any possible aspect related to network service communication:
- Reachability-connectivity testing between nodes and/or VNFs, servers, gateway systems etc.
- Network and application Performance and QoS (quality of service). Refers to quality of communication.
- Testing is not necessarily specific to a layer of a protocol stack rather than Multilayer aspects can be consider (PHY layer, MAC layer ,L3 testing etc.)
- Testing can be about next-hop or end-to-end or for a specific part of the path.
- Communication tests can be between physical or virtual components (e.g., VNFC to VNFC, VNFC to PNF, VNF to gateway, PNF to gateway etc.)Connectivity tests can refer to underlay network or overlay network components (e.g., L2, but also L2VPN, L3 VPN etc.)
- Testing can be performed over different virtualization technologies (e.g., VM-based, container-based).

### Domain Tester

The domain testers 420-422 perform dynamic identification of the endpoints (illustrated as black dots like for example the entry point 425 to the second WAN 409) used for the test. This identification is dynamic since in a virtualized environment the endpoints 425 may constantly change (e.g., because of mobility/scaling/failover etc.). The domain testers 420-422 further perform Translation of a TID (Testing Intent Descriptor) provided by the operator or the testing broker 423 to sub-tests related to any type of Virtual and physical network. Depending on the test the endpoints 425 may be related to digital twins. The domain tester decides whether the real component or the digital twin is used for the test. For example to avoid disrupting normal traffic. The respective domain tester 420-422 automatically decides whether to test the real VNF or the digital twin based on policies, real time conditions, constraints etc. In case of multiple test areas 626, depending on the testing intent, the respective domain tester 420-422 performs automatic management of area testers 627 inside each domain boundaries. Further, in case it uses multiple test areas 626, the respective domain tester 420-422 performs creation, deletion, updates and/or configuration of area testers 627, identification of area tester boundaries and area ingress and egress points etc.

For example, a test (e.g. initiated by one of the operators) of a connection 424 between the sender 407 and the receiver 404 may be performed as follows:
1) The operator who initiates the test passes a Testing Intent Descriptor (TID) to the domain tester 420-422 the operator provides. The TID describes what the test is about and high-level goals of the test. It can also provide detailed specification of the test.
2) If the TID cannot be translated to local actions by the domain tester 420-422 it is communicated to the testing broker 423.
3) The testing broker 423 automatically identifies the appropriate domain testers from other operators (of domains comprising components involved in the test). In the present example, all three domain testers 420-422 are involved (i.e. are of involved domains, i.e. domains having components involved in the test).
4) The testing broker 423 negotiates with the domain testers 420-422 about the testing features, tools, configurations etc. to use. This includes the domain testers 420-422 of the involved domains giving feedback about testing verification and feasibility. Feasibility may in particular include, for each domain tester, feasibility with respect to a policy of the domain tester (e.g. according to a policy of the domain tester's operator), i.e. whether test operations required by a sub-test are allowed by the policy.
5) Each domain tester perform a (sub-)test according to the outcome of the negotiation (possibly controlling area testers 627 accordingly, if it uses multiple test areas 626).

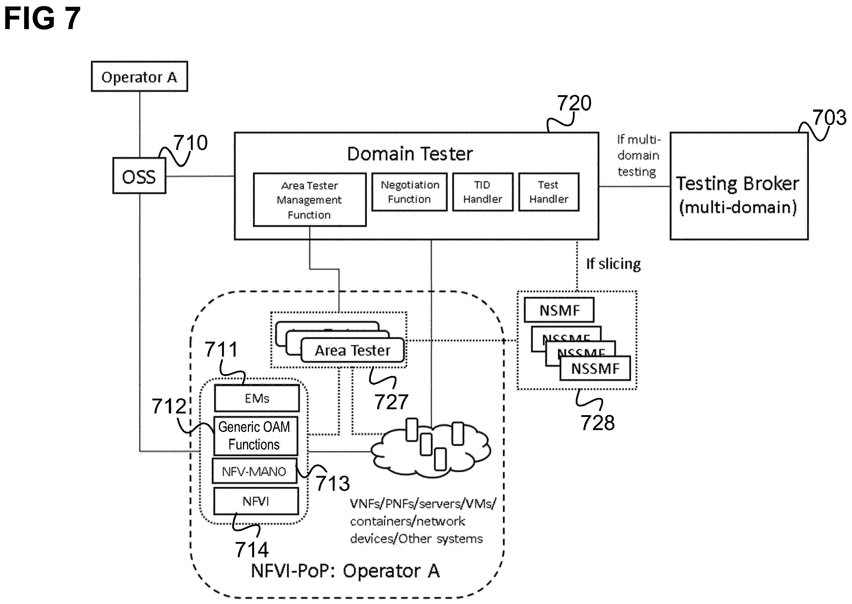

Figure 7 illustrates the functionality of a domain tester 720 in more detail in an example where the domain tester 720 uses area testers 727 and there are one or more network slice management system components 728 like one or more NSMFs and/or NSSMFs.

Domains can be established in various manners, such as administrative domains (like in the examples above), e.g., covering the case of multi-operator environments but also network domains, e.g., covering the case of testing between different network areas within a single administrative domain (operator).

The domain tester 720 is responsible for its respective domain (i.e. the domain with which it is associated). As mentioned above, a domain may for example include the components operated by one operator (i.e. the components for which one operator, e.g. an OSS/BSS, has configuration rights). A domain may also span multiple NFVI-PoPs of the same operator.

The domain tester 720 is aware of NFV and SDN (Software-Defined Networking) related information (e.g., get topology information, operational protocols etc.) and is able to perform connectivity tests for both the underlay and overlay networks.

For a test, the domain tester 720
- interacts with all the appropriate management systems to support configuration of the test, execution of the test and results retrieval.
- may perform initial parsing of the Testing Intent Description (TID, e.g., "test connectivity between VNF-1 and VNF-2"). This applies to the case that an operator sends the TID to the domain tester 720 rather than directly to the testing broker 423.
- dynamically identifies endpoints used for the test (e.g., IP address, Port, FQDN, URI or other) and distinguishes
   ∘ Case 1: all endpoints are internal to NFVI-PoP(s) of the domain tester's domain. Then the domain tester 720 may perform the test without other domain testers. This in particular applies if the test is a sub-test which the test broker 423 has specified for a test (which involves multiple domains)
   ∘ Case 2: external endpoints exist. Then the domain tester 720 calls the testing broker 423 and defines the endpoints for the test within its domain (e.g., in the gateway systems). This applies if the domain tester 720 has received the test from a component other than the test broker (because the test broker would have sent a sub-test) like from the OSS (or BSS) 710 of its operator.
- translates a received (sub-)test specification to actions (tools/ to use/ configuration) for end-to-end testing.
- performs feasibility study analysis.
- provides NFVI-PoP internal segmentation into test areas 626 and can allocate additional area testers 727
- manages area testers within the domain
- considers mixed NFVI environments (VM-based, Containerized, etc.)
- interacts with one or more of the OSS 710, the testing broker 423, area testers 727 within NFVI-PoP(s) 701 of the domain tester's), EMs 711, Generic CAM functions 712, NFV-MANO 713, Other components (e.g., NFVI Physical Infrastructure Managers, NSMF and/or NSSMFs in case of network slicing etc.)

It should be noted that a test can be also triggered automatically due to a Lifecycle management operation (e.g., a VNF was created).

### TID

The specification of a test may be in the form of a test intent, in particular a Testing Intent Descriptor (TID). For example, an operator who initiates the test passes a Testing Intent Descriptor (TID) to a domain tester or multiple domain testers under the operator's control. A TID provides the testing specification in an abstract or very detailed form. The TID describes what the test is about and high-level goals of the test. Examples are test L2 connectivity between all constituents of a network service NS#1.

The test management component may translate the TID of a test to a specification of sub-tests related to any type of Virtual and physical network.

Testing Intent example: Test L2 connectivity for Network Service#1.
- domain tester translates the test to the following sub-tests considering all virtualized and physical components which constitute the NS:
   ∘ Sub-test# 1: VNF1 - PNF1 or PNF1 digital twin depending on dynamics/requirements etc.
   ∘ Sub-test#2: VNF1 - VNF2
   ∘ Sub-test#3: VNF2 - VNF3 until time t
   ∘ Sub-test#4: VNF2 - VNF3 new endpoint after time t
   ∘ In case the endpoints are not passed in the TID the domain tester, through interaction with NFV-MANO/NFVI/EMs etc. identifies the endpoints to be used for the different sub-tests (e.g., IP/Ports, FQDN, URI etc.)
   ∘ Depending on constraints/policies/runtime performance/configuration/etc. then the domain tester may select the corresponding endpoint of a digital twin instead of the VNF/PNF etc.

### Test areas

The domain tester 720 may define, create and manage area testers 727 to segmentize its domain (at least partially) into test areas
- a-priori (before knowing the testing intent). In that case the domain tester will select the appropriate area testers to use for a test.
- a posteriori after the reception of a testing intent (of a test or sub-test) by the domain tester. In that case the domain tester is able to create new area testers 627 based on the needs of the experiment.
area testers 727 can follow standardized ETSI GS NFV-TST 011 processes. The domain tester 720 keeps an inventory with all the area testers 727 and manages all the area testers 627 and interacts with all the area testers 627 to synthesize and control the test or sub-test it should perform.

A test area 726 is a logical abstraction within the domain boundaries:
- a test area 726 may cover one or more layers of the protocol stack
- a test area 726 may cover a network segment within the domain.
- other segmentations of a domain (or a part thereof) into a test areas 726 or even combinations of the above may be considered.

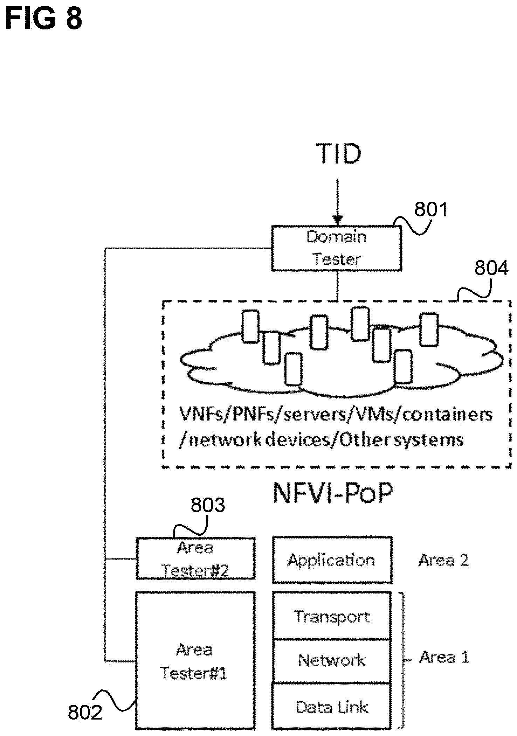

Figure 8 shows an example where a domain tester 801 has configured a first area tester 802 whose test area is the data link layer, the network layer and the transport layer of a communication network 804 within its domain and a second area tester 803 whose test area is the application layer of the communication network 804.

Endpoints are used by the corresponding domain testers and the area testers to identify senders and receivers (which may include intermediate senders and receivers along an end-to-end connection between an endpoint sender and an endpoint receiver). In a virtualized environment endpoints are typically constantly changing (e.g., because of mobility, scaling, failover etc.).. Area testers in communication with the domain tester can define the endpoints to use for each node or function (e.g. intermediate senders and receivers) involved in the test. This information is passed to domain testers and domain testers can communicate the endpoint information to another operator directly or through the testing broker. An endpoint can be an IP address, a network port, a socket, a FQDN etc.

Dynamic identification of the endpoints used for the test is made by the domain tester in communication with the area testers. Depending on the test the endpoints may be related to digital twins. The domain tester automatically decides whether to test the real VNF or the digital twin based on policies, real time conditions, constraints etc. For example to avoid overloading the production network, testing maybe be between digital twins or the real NFs or VNFs.

### Testing Broker

According to various embodiments, end to-end network service testing over multiple NFVI-PoPs under the control of the same or different operators is provided including testing negotiation and relevant interfaces. Specifically, a multi-operator/multi-domain testing broker is provided which translates (e.g. network service (NS)) end-to-end Testing Intents to sub-domain intents passed to domain testers. The testing broker negotiates with domain testers about the test case, tools and configurations to be used.

The testing broker 423 identifies administration boundaries (i.e. boundaries between operator domains) and components (and thus domain testers 420-422) it needs to communicate (interact) with for a certain test. Negotiation between domain testers 420-422 happens through the testing broker 423. The testing broker 423 may support negotiation between domain testers 420-422 and OSSs (and/or BSSs) 410, 415 in case an end-to-end test cannot be supported.

The testing broker is used to orchestrate, automate and support multi-operator end-to-end testing. It can perform and support testing negotiation, test handling, test intent handling. In more detail:
- Uses a testing inventory with the available domain testers 420-422. The inventory can be manually or dynamically be updated.
- Identifies administration boundaries and components he needs to talk to (with which domain testers needs to interact)
- Performs end-to-end test synthesis based on the testing intent specification, constraints, policies etc. through negotiation with the domain testers 420-422.
- Together with the domain testers negotiates the network demarcation points between different management components (e.g., customer edge (CE) gateway).
- Has the ability to correlate the testing results from different domain testers after the test execution.
- performs negotiation and identification of points of interaction between the domains. Points of interaction between the domains are also considered testing endpoints and could be also virtual and not fixed, yet are identified by the testing broker.
- provides end-to-end testing identifiers mapped to endpoint identifiers exposed by the domain testers.

As explained above with reference to figure 4 and figure 5, the testing broker 423, 523 may be arranged in accordance with a hierarchical architecture model or in accordance with a distributed architecture model. The functionality of the testing broker 423 may be a public service or the testing broker 423 may be co-owned by multiple operators or by one of the operators.

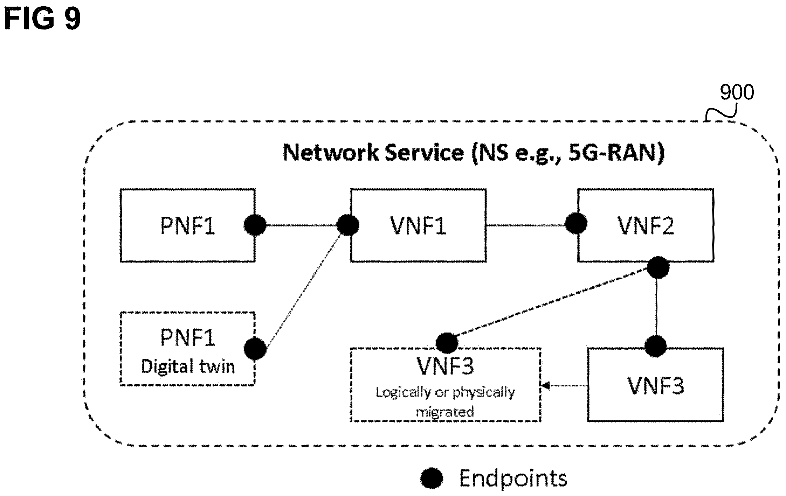

Figure 9 illustrates an example of a test.

The testing intent is in this example is to test L2 connectivity between all the components of network service 900.

One or more domain testers (depending on whether the test spans multiple domains) translate the test to the following sub-tests considering all virtualized and physical components which constitute the NS :
- Sub-test# 1: VNF1 - PNF1 or PNF1 digital twin depending on dynamics/requirements etc.
- Sub-test#2: VNF1 - VNF2
- Sub-test#3: VNF2 - VNF3 until time t
- Sub-test#4: VNF2 - VNF3 new endpoint after time t

In case the endpoints are not passed in the TID to the one or more domain testers, each domain tester may through interaction with NFV-MANO, NFVI and/or EMs etc. identifies, track and update the endpoints to be used for the different sub-tests (e.g., IP/Ports, FQDN, URI etc.).

Depending on constraints, policies, runtime performance and/or configuration etc. each domain tester may select the corresponding endpoint of a digital twin instead of the VNF, PNF etc.

The testing broker 423 parses uncompleted testing intents which have not yet been completed by a domain tester 420-422 (but for example forwarded from a domain tester 420-422 to the testing broker 423 because it spans multiple domains and thus cannot be completed by the domain tester 420-422). It finds the right domain tester(s) for a test according to a testing intent it has received and starts negotiation with each domain tester found. It negotiates with each domain testers about the test, tools and configurations to be used.

End-to-end testing may involve communication between area testers 627 and domain testers 620-622 and testing broker 423 and domain testers 420-422.

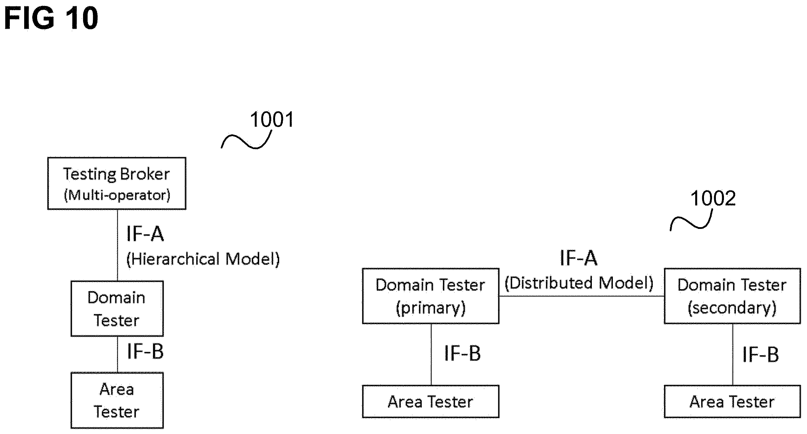

Figure 10 shows a first diagram 1001 illustrating a hierarchical architecture model and second diagram 1002 illustrating a distributed architecture model and the corresponding interfaces IF-A and IF-B.

The interfaces IF-A (hierarchical) and IF-A (distributed) are similar but not identical.

For example, differences may exist regarding the primary tester (i.e. master) election process and messaging (how the primary tester is advertised to the network) for the distributed architecture. Further, in the distributed architecture model, in case two secondary testers (i.e. slaves) need to communicate, then one is local primary tester and the other one local secondary tester.

Example operations over IF-A:
- TID or parts of TID transfer
- Test negotiation
- Test handling (e.g., execution)
- Test results transfer
- Domain Tester registration/de-registration
- Domain Tester status

Example IFA-B operations:
- TID or parts of TID transfer
- Test handling (e.g., execution)
- Test results transfer
- Test area management

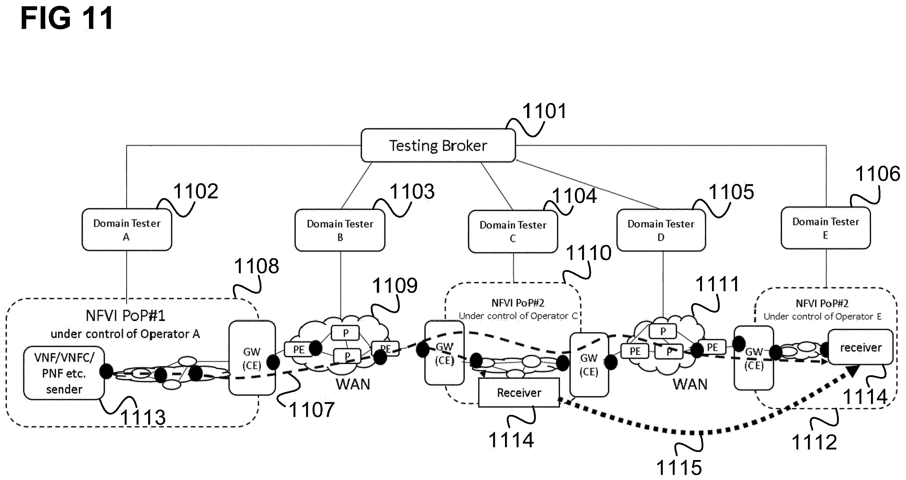

Figure 11 shows an example for an architecture where the testing broker 1101 is in communication with five domain testers 1102-1106 for testing a communication connection 1107, from a sender 1113 in a first NFVI-PoP 1108 through a first WAN 1109, a second NFVI-PoP 1110, a second WAN 1111 to a receiver 1114 in a third NFVI-PoP 1112.

As indicated by the arrow 1115, the receiver 1114 may have been migrated from the second NFVI-PoP 1110 to the third NFVI-PoP 1112.

To handle this, according to various embodiments, the testing broker 1101 and/or the domain testers 1102-1106 may consider that endpoints of testing are related to logical entities and can be moved according to the setup of the network service or VNFs, e.g., when a VNF (like here the receiver 1114) is migrated or logically moved. In that case a more sophisticated identification of the endpoints to be used, e.g. of the receiver 1114, may be considered.

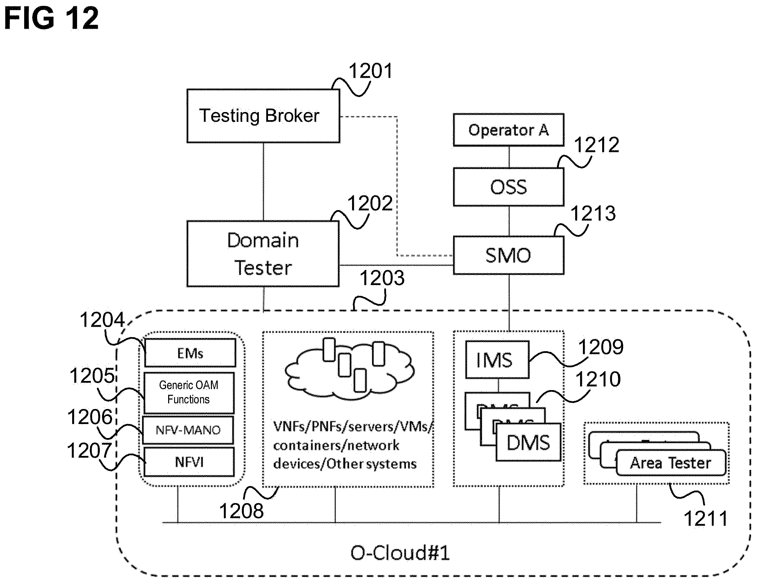

Figure 12 shows an example where a testing broker 1201 is arranged in an O-RAN architecture. The domain of a domain tester 1202 in this example is an O-Cloud 1203 (comprising for example element managers 1204, generic OAM functions 1205, an NFV-MANO 1206, an NFVI 1207, a communication network 1208, one or more IMS (Infrastructure Management Services) components 1209, one or more DMS (Deployment Management Services) components 1210 and area testers 1211.

The IMS component(s) 1209 and the DMS component(s) 1210 are connected to the respective operator's OSS 1212 via an SMO (Service Management & Orchestrator) function 1213 which is also connected to the testing broker 1201 and the domain tester 1202. Each domain tester is responsible for each O-Cloud and negotiation through the broker is made between domain testers.

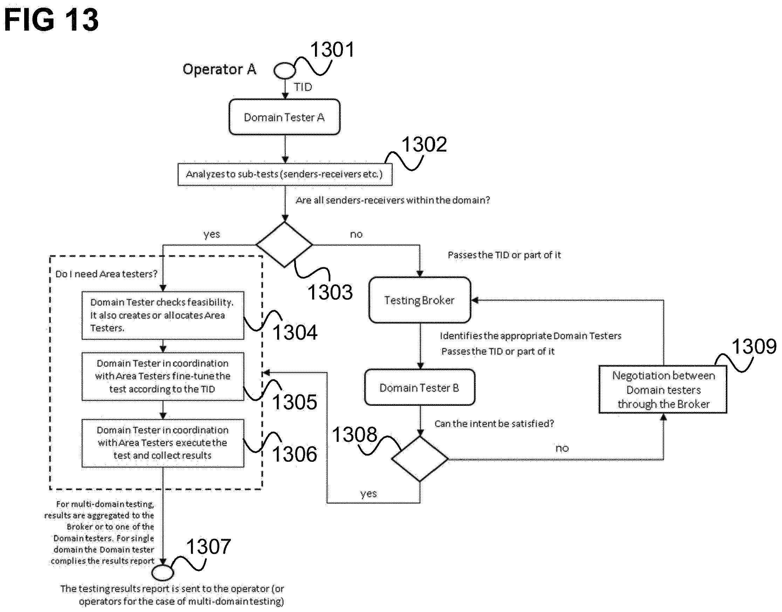

Figure 13 shows an exemplary flow for performing a test in case that the specification of the test, i.e. test intent in form of a TID, is passed to one of the domain testers, in this example the first domain tester 420.

In 1301, Operator A passes the TID to the first domain tester (e.g., though OSS).

In 1302, the first domain tester analyses the TID to determine which sub-tests (in particular senders and receivers and the corresponding endpoints) are involved in the test.

In 1303, the first domain tester checks whether all the determined endpoints lie with its own domain. If that is the case, the domain tester
- in 1304 checks feasibility of the test and creates and allocates area testers (if it is configured to or decides to use area testers).
- in 1305 fine-tunes the test according to the TID (in coordination with the area testers if used)
- in 1306 executes the test and collects the results (in coordination with the area testers if used)

In 1307, the test results (of all sub-tests) are reported to the operator (or multiple operators).

If the determined endpoints do not lie with the first domain tester's domain the domain tester passes the TID or a part of it to the testing broker which communicates with one or more other involved domain testers (here assumed to be only the second domain tester 421) and passes the TID (or the part relevant for the second domain tester 421, i.e. for its assigned sub-test, i.e. the sub-test (of the overall test specified by the TID) to be performed by the second domain tester 421) to the second domain tester 421. In 1308, each involved domain tester indicates whether it can perform its test according to the TID (or TID part) passed to it. If not, the involved domain testers (here the first domain tester 420 and the second domain tester 421) in 1309 negotiate with and/or through the testing broker 423 to derive a new TID for its respective sub-test. When the sub-test assigned to it each domain tester can be performed, the negotiation ends, the sub-test is performed according to 1304 to 1306 and the results are reported in 1307 to the operator or through the broker to the operator.

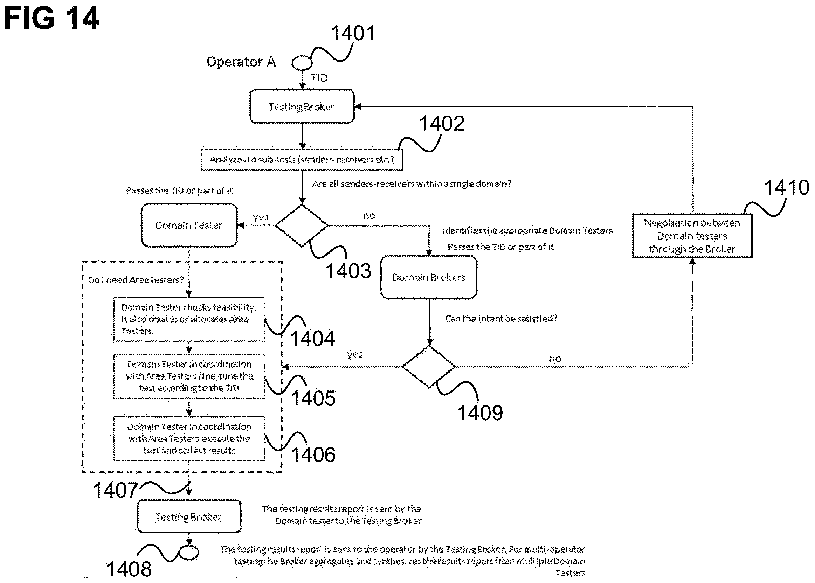

Figure 14 shows an exemplary flow for performing a test in case that the specification of the test, i.e. test intent in form of a TID, is passed to the testing broker 423.

In 1401, Operator A passes the TID directly to the testing broker 423.

In 1402, the testing broker analyzes the TID to determine which sub-tests (in particular senders and receivers and the corresponding endpoints) are involved in the test.

In 1403, the testing broker whether all the determined endpoints lie with the domain of a single domain tester. If that is the case, the testing broker transmits the TID to that domain tester and the domain tester
- in 1404 checks feasibility of the test and creates and allocates area testers (if it is configured to or decides to use area testers).
- in 1405 fine-tunes the test according to the TID (in coordination with the area testers if used)
- in 1406 executes the test and collects the results (in coordination with the area testers if used)

In 1407, the domain tester sends the test results to the testing broker which reports the test results to one or more operators in 1408.

If the determined endpoints do not lie with a single domain tester's domain the testing broker communicates with all involved domain testers and passes the TID to each of them (or the part relevant for the respective domain tester, i.e. for its assigned sub-test, i.e. the sub-test (of the overall test specified by the TID) to be performed by the domain tester). In 1409, each involved domain tester indicates whether it can perform its test according to the TID (or TID part) passed to it. If not, the involved domain testers in 1410 negotiate with and/or through the testing broker 423 such that each testing broker gets a new TID for its respective sub-test. When each involved testing broker can perform the sub-test assigned to it each domain tester performs the sub-test according to 1404 to 1406 and the results (of all sub-tests) are reported in 1407 and 1408 (through the testing broker).

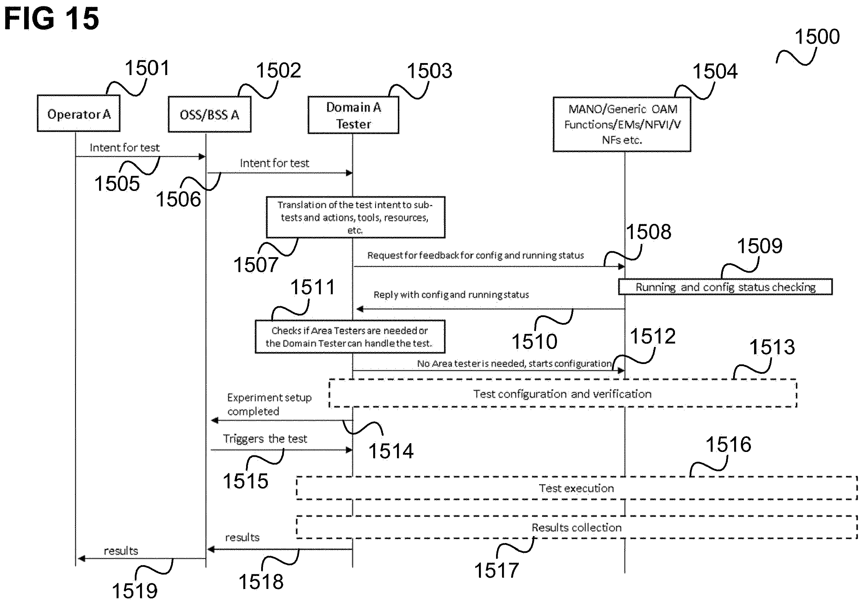

Figure 15 shows a flow diagram 1500 illustrating an example for single operator intra-domain NS connectivity testing, i.e. it is assumed that sender and receiver of a communication connection to be tested are within the domain of a single domain tester.

An operator 1501, an OSSBSS 1502, a domain tester 1503 and one or more components 1504 of the domain tester's domain (e.g. an NFV-MANO) are involved in the flow.

In 1505 and 1506, the operator sends the specification of a test intent (e.g. TID) via the OSS/BSS 1506 to the domain tester 1503.

In 1507, the domain tester 1503 translates the test intent to sub-tests for the components 1504 and requests the components 1504 for feedback in 1508. The components 1504 check feasibility status in 1509 and reply to the request of 1508 in 1510.

In 1511, the domain tester 1503 depending on the reply checks whether area testers are needed for the test. In this example, it is assumed that no area testers are needed.

In 1512, the domain tester 1503 starts configuration of the components for the test and in 1513, test configuration and final verification are performed.

In 1514, the domain tester 1503 informs the OSS/BSS 1502 that setup has been completed and the OSSBSS triggers the test in 1515.

In 1516 the domain tester 1503 and the components 1504 execute the test and the results are collected in 1517 and reported to by the domain tester 1503 to the operator 1501 via the OSSBSS 1502 in 1518 and 1519.

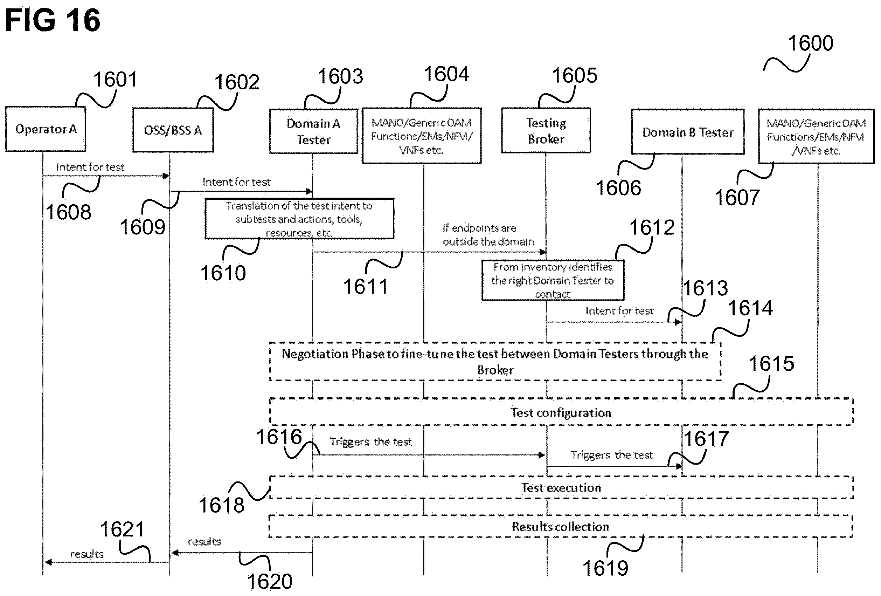

Figure 16 shows a flow diagram 1600 illustrating an example for multi operator intra-domain NS connectivity testing, i.e. it is assumed that sender and receiver of a communication connection to be tested are in domains managed from different domain testers (e.g. belonging to different operators).

An operator 1601, an OSSBSS 1602, a first domain tester 1603, one or more components 1604 of the first domain tester's domain (e.g. a first NFVI-PoP management systems, resources etc.), a testing broker 1605, a second domain tester 1606 and one or more components 1607 of the second domain tester's domain (e.g. a second NFVI-PoP management systems, resources etc.) are involved in the flow.

In 1608 and 1609, the operator sends the specification of a test intent (e.g. TID) via the OSS/BSS 1602 to the first domain tester 1603.

In 1610, the first domain tester 1603 translates the test intent to sub-tests. It is assumed that this sub-tests involve tests for components 1604 in the first domain tester's domain as well as for components 1607 in the second domain tester's domain.

Accordingly, in 1611, the first domain tester 1603 sends the test intent to the testing broker 1605 and the testing broker 1605 in 1612 identifies which domain testers need to be involved in the test, here assumed to be, besides the first domain tester 1603, the second domain tester 1606. In 1613, the testing broker 1605 sends the test intent for the sub-test to be performed by the second domain tester 1606 to the second domain tester 1606.

In 1614, the domain testers 1603, 1606 and the testing broker 1605 negotiate to derive a feasible end-to-end test and fine-tune the test.

In case there is a feasible test in 1615, the components 1604, 1607 of the domain testers' domains are configured accordingly. If there is no feasible test to be performed negotiation may also involve the OSSBSS systems.

In 1616, the first domain tester 1603 triggers the test by signalling to the testing broker 1605. In 1617, the testing broker 1605 informs the second domain tester 1606 accordingly.

In 1618 the domain testers 1603, 1606 and the components 1604, 1607 execute the test and the results are collected in 1619 and reported to by the first domain tester 1603 to the operator 1601 via the OSSBSS 1602 in 1620 and 1621.

It should be noted that test triggering can be done by the OSS/BSS like in the example of figure 15 or by a domain tester like in the example of figure 16 but can for example also be triggered by an LCM (life cycle management) operation (e.g., VNF scaling).

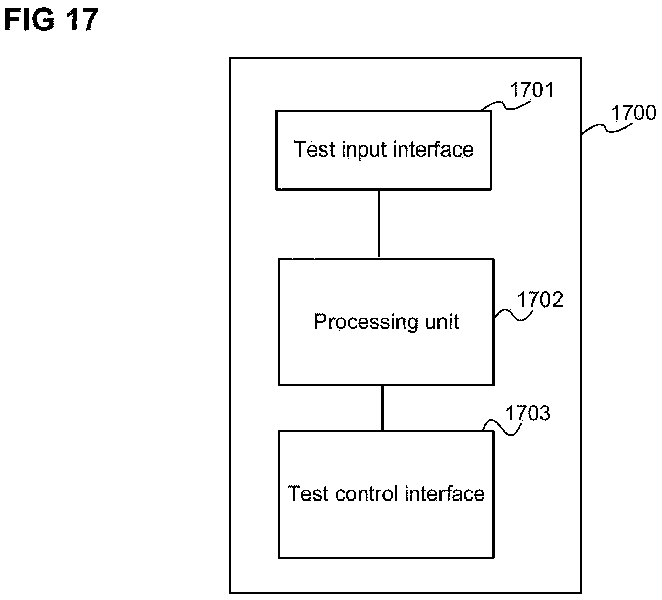

In summary, according to various embodiments, a test management component is provided as illustrated in figure 17 .

Figure 17 shows a test management component 1700 of a communication system.

The test management component 1700 comprises a test input interface 1701 configured to receive a request for a test to be performed in the communication system and a specification of the test.

The test management component 1700 further comprises a processing unit 1702 configured to determine, according to the specification of the test,
- a plurality of communication network components of the communication system which need to be involved in the test to perform the test; and
- for each communication network component a respective test controller which is able to manage the communication network component with respect to testing; and
- for each determined test controller a specification of a sub-test to be performed by the test controller for the communication network components among of the determined plurality of communication network components which the test controller is able to manage with respect to testing.

The test management component 1700 further comprises a test control interface 1703 configured to send, for each determined test controller, the determined specification of the sub-test to be performed by the test controller to the test controller. The test control interface is also used to orchestrate the end-to-end test (e.g., fine tune the test and collect test results from multiple domains).

According to various embodiments, in other words, a central entity is provided which may manage a test spanning multiple testing domains (i.e. domains managed by different test controllers with respect to testing, e.g. because the domains belong to different operators) by determining the domain controllers (i.e. test controllers) that need to be involved to perform the test and control them accordingly (by providing them with sub-tests to be performed such that overall, the test is performed). A test controller being able to manage a component with respect to testing may mean that the test controller is able (e.g., has the right) to manage the component with respect to testing. Accordingly, a test controller not being able to manage a component with respect to testing may mean that the test controller does not have the right to manage the component or cannot configure the component with respect to testing.

The test management component for example corresponds to the testing broker in the examples described above. In that case, the test controllers corresponds to the domain testers. Alternatively, the test management component may correspond to one of the domain testers in the examples described above. In that case, the test controllers corresponds to the area testers (also referred to test area controllers).

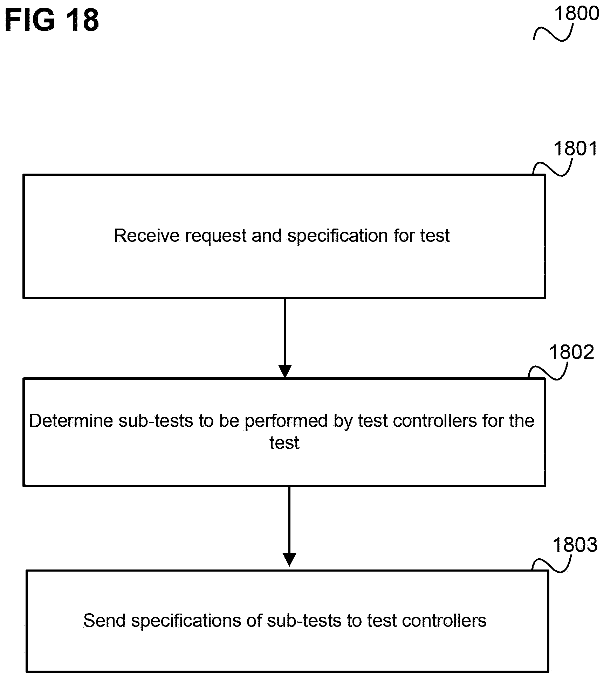

For example, a method as illustrated in figure 18 is carried out.

Figure 18 shows a flow diagram 1800 illustrating a method for managing a test of a communication system.

In 1801, a request for a test to be performed in the communication system and a specification of the test is received.

In 1802, according to the specification of the test,
- a plurality of communication network components of the communication system which need to be involved in the test to perform the test are determined;
- for each communication network component a respective test controller which is able to manage the communication network component with respect to testing is determined; and
- for each determined test controller a specification of a sub-test to be performed by the test controller for the communication network components among of the determined plurality of communication network components which the test controller is able to manage with respect to testing is determined.

In 1803, for each determined test controller, after negotiation in case of feasibility issues the determined specification of the sub-test to be performed by the test controller is sent to the test controller.

The test management component for example corresponds to the testing broker in the examples described above. In that case, the test controllers corresponds to the domain testers. Alternatively, the test management component may correspond to one of the domain testers in the examples described above. In that case, the test controllers corresponds to the area testers (also referred to test area controllers).

Regarding test management, for example;
- Any domain is managed by a domain tester (DT)
- A domain tester is managed by an Operator through OSSBSS.
- A domain tester can manage one or more (testing) domains belonging to the same operator.
- A domain tester can interact with area testers inside a domain.
- To manage virtualized resources or functions a domain tester and area testers can interact with NFV-MANO. To manage physical resources a domain tester and area testers can interact with NFVI management systems.
- In the light of Network slicing, domain testers can also interact with the Network Slice management systems directly or indirectly through NFV-MANO or OSSBSS.
- A domain tester interacts with: OSS, The testing broker , With area testers (within the NFVI-PoP), EMs, Generic CAM functions, NFV-MANO, Other entities (e.g., NFVI Physical Infrastructure Managers, NSMF and/or NSSMFs in case of network slicing etc.)

A domain tester for example
- Analyzes the TID in two dimensions inside the domain operations and outside the domain operations:
   ∘ Inside the domain operations:
      ▪ The domain tester is able to further logically segment the domain to test areas.
      ▪ For each test area inside a domain, an area tester is used to manage testing.
      ▪ The area testers are managed by the domain tester. The domain tester can create dynamically area testers or select area testers from a predefined set.
      ▪ Testing aspects inside the domain are orchestrated by the domain tester in communication with the area testers.
      ▪ The domain tester identifies test area boundaries and area ingress/egress points etc., and allocates an area tester to the test area.
   ∘ Outside the domain operations:
      ▪ If the TID translation requires communication with external management entities, TID or part of it is communicated to the testing broker.
      ▪ A testing broker automatically identifies the appropriate domain testers from other operators.
      ▪ A testing broker negotiates with the domain testers about the testing features, capabilities, tools and configurations to use.
- Gives feedback through the testing broker about testing verification and feasibility.
- During negotiation with the testing broker can interact with OSSBSS in case an end-to-end test cannot be supported.
- Can, in one embodiment, include the testing broker, i.e. the testing broker can be part of one of the domain testers (i.e. correspond to the same entity).
   ∘ The domain tester with testing broker service capabilities (i.e. having the test management system functionality) is declared as primary domain tester while others domain testers are declared as secondary domain testers.
   ∘ The primary domain tester orchestrates the test.
- The domain tester and the area testers are aware of NFV and SDN related information (e.g., get topology information, operational protocols etc.)
- The domain tester and the area testers are able to perform connectivity tests for both the underlay and overlay networks
- The domain tester and the area testers interact with NFV-MANO, EMs, Generic OAM functions and NFVI to retrieve management information used to support the test.
- The domain tester and the area testers interact with all the appropriate management systems to support configuration of the test, execution of the test and results retrieval.
- The test procedures can be also triggered automatically due to a Lifecycle management operation (e.g., a VNF was created)
- The domain tester and the area testers jointly perform feasibility study analysis for inside a domain.
- The domain tester and the testing broker jointly perform feasibility study analysis for the end-to-end test.

As explained above, a test area is a logical abstraction:
- Case 1: one area may cover one or more layers of the protocol stack.
- Case 2: a test area may cover a network segment within the domain.
- Case 3: other forms or even combinations of the above may be considered.

An area tester can manage testing for one or more test areas inside the same domain. Each operator domain is considered as one flat network. area testers can automatically logically segment the network within the domain boundaries for more granular testing. Area testers can be defined and created:
- Case 1: a-priori (before knowing the testing Intent). In that case the domain tester will select the appropriate area testers to use.
- Case 2: A posteriori after the reception of the testing intent by the domain tester. In that case the domain tester is able to create new area testers based on the needs of the experiment.

Area testers can follow standardized processes and processes from other inventions. A domain tester for example keeps an inventory with all the area testers. A domain tester manages all the area testers (which are associated with it, i.e. are responsible for test areas within the domain tester's domain) and interacts with all the area testers to synthesize and manage the test.

The components of the test controller and the test management component may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A test management component of a communication system, comprising:
a test input interface configured to receive a request for a test to be performed in the communication system and a specification of the test;
a processing unit configured to determine, according to the specification of the test,
a plurality of communication network components of the communication system which need to be involved in the test to perform the test;
for each communication network component a respective test controller which is able to manage the communication network component with respect to testing; and
for each determined test controller a specification of a sub-test to be performed by the test controller for the communication network components among of the determined plurality of communication network components which the test controller is able to manage with respect to testing; and
a test control interface configured to send, for each determined test controller, the determined specification of the sub-test to be performed by the test controller to the test controller.

2. The test management component according to claim 1, wherein each test controller has a respective policy and/or is able to use respective capabilities and resources for testing and the test management component is configured to negotiate with each test controller the sub-test to be performed by the test controller to conform with the policy of the test controller and/or to be feasible with the capabilities supported and the available resources.

3. The test management component according to claim 1 or 2, wherein each sub-test includes a plurality of test operations and the negotiation with each test controller comprises determining the test operations to conform with the policy of the test controller and the specification of the sub-test.

4. The test management component according to any one of claims 1 to 3, wherein the test is about end-to-end communication testing between two components of the communication system and determining the plurality of communication network components of the communication system which need to be involved in the test comprises determining communication network components providing the end-to-end communication.

5. The test management component according to any one of claims 1 to 4, wherein each test controller is able to manage communication network components of a respective domain of the communication system associated with the test controller with respect to testing.

6. The test management component according to any one of claims 1 to 5, wherein each domain of the communication system comprises one or more sub-networks and/or one or more layers of the protocol stack of the communication system.

7. The test management component according to any one of claims 1 to 6, wherein the domains associated with different test controllers are domains of different communication network operators.

8. The test management component according to any one of claims 1 to 7, wherein the test input interface is configured to receive the request for the test and the specification of the test from a support system of one of the communication network operators or from one of the test controllers.

9. The test management component according to any one of claims 1 to 8, wherein the test controllers are test area controllers, wherein each test area controller controls a respective sub-set of communication network components and/or functionalities of communication network components.

10. The test management component according to claim 9, wherein the test management component is configured to create at least some of the test area controllers according to the specification of the test.

11. A test controller of a part of a communication system comprising:
a test input interface configured to receive a request for a test to be performed in the communication system and a specification of the test; and
a processing unit configured to
determine whether the test involves one or more communication network components which the test controller is not able to manage with respect to testing; and
if the test involves one or more communication network components which the test controller is not able to manage with respect to testing, trigger a test management system functionality for managing that the test is performed by the test controller and a set of one or more other test controllers which are able to manage the one or more communication network components which the test controller is not able to manage with respect to testing.

12. The test controller of claim 11, configured to perform the test if the test involves only communication network components which the test controller is able to manage with respect to testing.

13. A communication system comprising a test management component of any one of claims 1 to 10 and a test controller of claim 11 or 12.

14. A method for managing a test of a communication system, the method comprising:
receiving a request for a test to be performed in the communication system and a specification of the test;
determining, according to the specification of the test,
a plurality of communication network components of the communication system which need to be involved in the test to perform the test;
for each communication network component a respective test controller which is able to manage the communication network component with respect to testing;
for each determined test controller a specification of a sub-test to be performed by the test controller for the communication network components among of the determined plurality of communication network components which the test controller is able to manage with respect to testing;
sending, for each determined test controller, the determined specification of the sub-test to be performed by the test controller to the test controller.

15. A method for processing a request for a test of a communication system, the method comprising:
receiving, by a test controller, a request for a test to be performed in the communication system and a specification of the test determining whether the test involves one or more communication network components which the test controller is not able to manage with respect to testing; and
if the test involves one or more communication network components which the test controller is not able to manage with respect to testing, triggering a test management system functionality for managing that the test is performed by the test controller and a set of one or more other test controllers which are able to manage the one or more communication network components with respect to testing which the test controller is not able to manage with respect to testing.
